# EUROPEAN PATENT SPECIFICATION

(11) **EP 2 839 696 B1**
(45) Date of publication and mention of the grant of the patent: **08.08.2018**
(21) Application number: 12728463.6
(22) Date of filing: 13.06.2012
(51) Int. Cl.: H04W 36/00, H04W 88/16

(54) **SRVCC HANDOVER OF CALLS BETWEEN ACCESS NETWORKS WITH EFFICIENT MEDIA GATEWAY SELECTION**
SRVCC-ÜBERGABE VON ANRUFEN ZWISCHEN ZUGANGSNETZWERKEN MIT EFFIZIENTER MEDIAGATEWAY-AUSWAHL
TRANSFERT D'APPELS AVEC SRVCC ENTRE DES RÉSEAUX D'ACCÈS AVEC SÉLECTION EFFICACE D'UNE PASSERELLE MULTIMÉDIA

(30) Priority: 17.04.2012 WO PCT/EP2012/057025
(43) Date of publication of application: 25.02.2015
(73) Proprietor: Telefonaktiebolaget LM Ericsson (publ), 164 83 Stockholm (SE)
(72) Inventor: KELLER, Ralf, 52146 Würselen (DE); LINDHOLM, Fredrik, S-112 15 Stockholm (SE); PERTTULA, Kari-Pekka, FI-02770 Espoo (FI); RANKE, Karl-Peter, 52134 Herzogenrath (DE)
(74) Representative: Ericsson
(86) International application number: PCT/EP2012/061231
(87) International publication number: WO 2013/156089

(56) References cited:
- EP-A1- 2 343 922
- WO-A1-2011/098137
- WO-A1-2011/160928
- "3rd Generation Partnership Project; Technical Specification Group Services and System Aspects; Single Radio Voice Call Continuity (SRVCC); Stage 2 (Release 11)", 3GPP STANDARD; 3GPP TS 23.216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.4.0, 8 March 2012 (2012-03-08), pages 1-64, XP050555332,

## Description

### Technical Field

The present invention relates to methods and apparatus in a telecommunications network for improving selection of a Media Gateway (MGW) at handover of a call from a Packet Switched (PS) access network to a Circuit Switched (CS) access network. More particularly, the invention relates to a handover with Single Radio Voice Call Continuity (SRVCC).

### Background

IP Multimedia services provide a dynamic combination of voice, video, messaging, data, etc, within the same session. This has lead to a growth in the numbers of basic applications and the media which it is possible to combine, leading to a growth in the number and variety of services offered to the end users - so-called "combinational IP Multimedia" services.

IP Multimedia Subsystem (IMS) is the technology defined by the Third Generation Partnership Project (3GPP) to provide Internet Protocol (IP) Multimedia services over mobile communication networks. IMS provides key features to enrich the end-user communication experience through the integration and interaction of services both person-to-person (client-to-client) as well as person-to-content (client-to-server) communications over an IP-based network. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session.

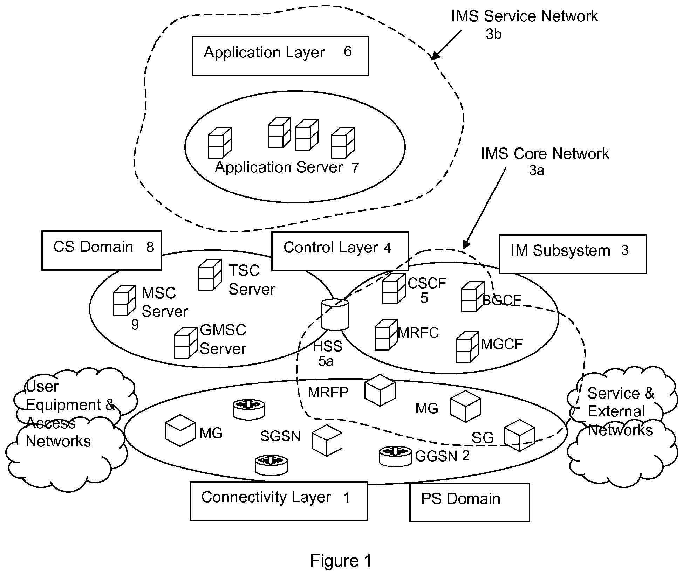

Figure 1 illustrates schematically how the IMS fits into the mobile network architecture in the case of a General Packet Radio Service (GPRS) access network. Although numerous network entities, or nodes are depicted, only those relevant to the present discussion have been assigned reference numerals. As shown in Figure 1 control of communications occurs at three layers (or planes). The lowest layer is the Connectivity Layer 1, also referred to as the bearer plane and through which signals are directed to/from user equipment (UE) accessing the network. The entities within the connectivity layer 1 that connect an IMS subscriber to IMS services form a network that is referred to as the IP-Connectivity Access Network (IP-CAN). The GPRS network includes various GPRS Support Nodes (GSNs). The middle layer is the Control Layer 4, and at the top is the Application Layer 6. Media Gateways (MGWs) 10 provide a translation function that converts media streams between networks operating different technologies or with different transport protocols.

The IMS 3 includes a core network 3a, which operates over the middle, Control Layer 4 and the Connectivity Layer 1, and a Service Network 3b. The IMS core network 3a includes nodes that send/receive signals to/from the GPRS network via the GGSN 2 at the Connectivity Layer 1 and network nodes that include Call/Session Control Functions (CSCFs) 5. The CSCFs 5 operate as SIP proxies within the IMS in the middle, Control Layer 4. Other IMS core network entities shown include a Media Resource Function Controller (MRFC), a Border Gateway Control Function BGCF and a Media Gateway Control Function, (MGCF). The IMS also includes a Home Subscriber Server (HSS) 5a, which supports the IMS nodes that handle calls and performs authentication and authorization of the user. The top, Application Layer 6 includes the IMS service network 3b. Application Servers (ASs) 7 are provided for implementing IMS service functionality.

As shown in Figure 1, User Equipment (UE) can access the IMS by attaching to an access network and then over the Connectivity Layer 1, which is part of a PS domain. If the UE attaches to the network via a PS access network, such as a 3GPP Long Term Evolution (LTE) access network, an IMS session can be set up by the UE using SIP signalling. However, many existing access networks operate only using CS technology, and a UE may also access IMS services via a CS domain 8. Although the CS domain 8 will not handle SIP, procedures are well established for dealing with the provision of media and services between the IMS and a UE using a CS access. In a CS access, A UE attaches via a Radio Access Network (RAN - such as a Global System for Mobile Communications (GSM) Edge RAN, GERAN), which is communicatively coupled to a Mobile Switching Centre (MSC) Server 9.

There are many occasions when during a call/session it is required to transfer or hand over the call/session from one access network to another. There are a variety of factors that are used to determine when a call needs to be handed over to another access network, but these are not particularly relevant to the present discussion. Generally, the access network determines, based on the cells for which the UE reports measurements, when the conditions arise that require a request to be made to the core network for the call to be handed over.
Single Radio Voice Call Continuity (SRVCC) is described in 3GPP TS 23.237 V11.2.0 (2011-09), referred to hereafter as TS 23.237, and 3GPP TS 23.216 V11.2.0 (2011-09), referred to hereafter as TS 23.216. These specify procedures for handover of a call from a PS access to a CS access (e.g. transfer of a Voice-over-IP, VoIP, IMS session from an evolved Universal Mobile Telecommunications System (UMTS) Terrestrial RAN, E-UTRAN, to a UTRAN/GERAN).
When a UE performs a SRVCC handover, the MSC Server 9 performs certain actions related to allocation of resources for the call in the target CS access network (i.e. in a Base Station Controller, BSC or a Radio Network Controller RNC), which it needs to do before it starts interacting with the IMS. For example, a codec is selected for the call during the CS access. Although the MSC Server 9 also obtains information from a Mobile Management Entity (MME) on the codecs supported by the UE, it does not know which of these supported codecs is actually being used by the UE on the PS access (e.g. LTE or High Speed Packet Access, HSPA). This may result in a different codec being selected for the session on the CS access than was being used on the PS access. As a consequence there may be degradation of the speech quality, and inefficient use of resources, due to transcoding that has to be performed by a MGW after the SRVCC handover.
Another problem that arises with current procedures is that the MSC Server 9 seizes a Mobile-Media Gateway (M-MGW) that it will use for the call. Other Media Gateways (MGWs) may also be seized (or allocated), for example the Access Transfer Control Function (ATCF) - an IMS entity that controls access transfers - may seize an Access Transfer Gateway (ATGW), and in roaming scenarios the Interconnection Border Control Function (IBCF) may seize a Transition Gateway (TrGW), which is yet another gateway node. The seizing of all these separate nodes is inefficient and sub-optimal, especially as they all perform the same basic functions (with only a few differences). In the following discussion, the term MGW is used to refer generally to any of these nodes, except where there is a specific need to differentiate between the roles, where the individual gateway names, M-MGW, ATGW or TrGW, will be used.

3GPP TS 23.216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.4.0, 8 March 2012 (2012-03-08), discloses the standard SRVCC procedure.

EP 2 343 922 A1 discloses with respect to D1 the standard procedure of SRVCC and describes a certain SIP/SDP signalling for indicating the IP address of a MGW.

WO 2011/160928 discloses an enhanced radio voice call continuity gateway solution in which SRVCC procedures can be configured to minimise interruptions in speech communications by proper configuration of PD GW, serving GW, media GW.

### Summary

A first aspect provides a method of performing a session transfer with Single Radio Voice Call Continuity, SRVCC, from a Packet Switched, PS, access to a Circuit Switched, CS, access of a telecommunications session that has been established over the PS access via an IP Multimedia Subsystem, IMS, network. The method, effected by a Mobile Switching Centre, MSC, Server, includes receiving a request for the transfer of the session to the CS access. An indication of one or more already seized media gateways, MGWs, is obtained from the IMS network. Either a new MGW or one of the one or more already-seized MGWs is selected as a Mobile-Media Gateway, M-MGW, for the session based on the obtained indication. Allocation of resources for the session in the CS access network is initiated, including specifying the MGW to be used as the Mobile-Media Gateway, M-MGW. transfer of the session to the CS access is then initiated.
A second aspect provides a Mobile Switching Centre, MSC, server of a telecommunications network. The MSC server includes an input/output for sending and receiving messages to/from other network entities, a memory storing data and programming instructions, and a processor. The processor implements the programming instructions to action a Single Radio Voice Call Continuity, SRVCC request for transfer of a session established over a Packet Switched, PS, access via an IP Multimedia Subsystem, IMS, network to a Circuit Switched, CS, access. This includes obtaining from the IMS network an indication of one or more already seized media gateways, MGWs, and selecting a MGW as a Mobile-Media Gateway, M-MGW, for the session based on the obtained indication.

A third aspect comprises the computer program product, which when run on the computer of the MSC Server of the second aspect effects the method of the first aspect.

In other words, when the Mobile Switching Centre (MSC) server receives the PS to CS handover Request it obtains (e.g. from the Access Transfer Control Function, ATCF) an indication of any already seized MGWs being used for the CS access. For example, the ATCF may provide the identity of a currently used Access transfer Gateway (ATGW), or an indication of a Transition Gateway (TrGW) already allocated to an Interconnection Border Control Function (IBCF). The ATGW and TrGW may be the same MGW. This may be in addition to information about the currently used voice codec, and other media information provided to the MSC such as payload type numbers used in RTP. The MSC may obtain the information by querying the IMS, or by sending the session transfer request early and obtaining the information in the response, so that it can then determine the best MGW to use for the transferred call. In addition, the MSC may specify the codec to be used when initiating the transfer.

Other aspects include a computer program product comprising instructions for enabling a computer in a network to implement this methodology.

### Brief Description of the Drawings

Figure 1 is a schematic illustration showing how the IMS fits into the mobile network architecture in the case of a GPRS access network.
Figure 2 is a signal diagram of part of one embodiment of a SRVCC handover procedure.
Figure 3 is a signal diagram of part of another embodiment of a SRVCC handover procedure.
Figure 4 is a flow diagram illustrating a series of steps in a SRVCC handover method.
Figure 5 is a schematic block diagram showing functional components in a network entity.

### Detailed Description

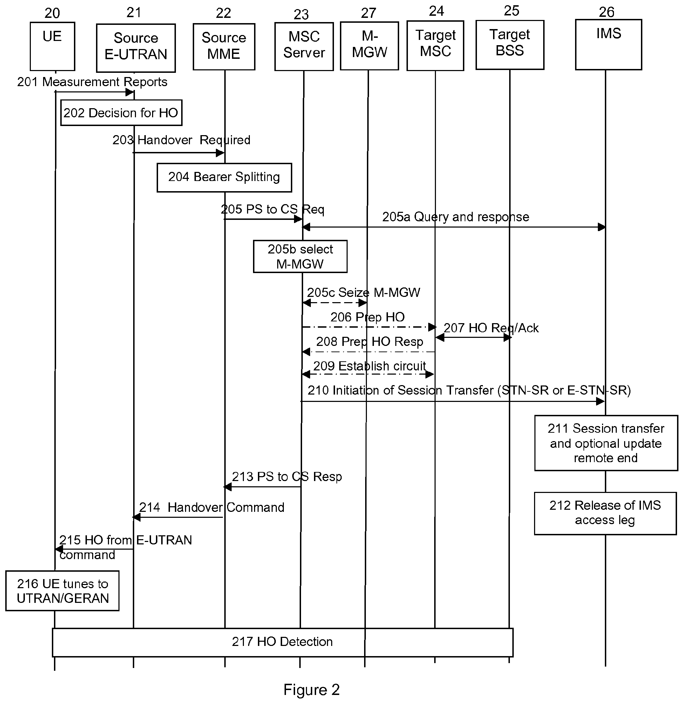

Referring to Figure 2, this illustrates the signalling involved in part of a Single Radio Voice Call Continuity (SRVCC) handover procedure for a first embodiment. In this embodiment, the indication of any already-seized Media Gateways (MGWs), and optionally codec information, is obtained by a Mobile Switching Centre (MSC) server 23 sending a query to the IMS 26. An M-MGW 27 is an MGW that the MSC server will select for the CS access. The other entities shown include a User Entity (UE) 20 which is engaged in a call and is accessing the IMS 26 via a PS radio access network (RAN), which in this case is an evolved Universal Mobile Telecommunications System (UMTS) Terrestrial RAN, E-UTRAN E-UTRAN, designated as the Source E-UTRAN 21. Mobility management is handled by a Source Mobility Management Entity (MME) 22. Also shown are a target MSC 24 and a target Base Station Server (BSS) 25 in the target CS access network to which the call will be transferred in a SRVCC handover. The example signal flow shown in Figure 2 is for transfer to a GSM Edge RAN (GERAN) without Dual Transfer Mode (DTM). However, the same principles can be applied to other call cases as documented in TS 23.216.

Signals 201 to 205 are the same as specified in TS 23.216. Briefly, signal(s) 201 represent measurement reports sent from the UE 20 to the source E-UTRAN 21, and based on which the E-UTRAN 21 decides at step 202 to request a SRVCC handover. The Source E-UTRAN 21 sends a SRVCC Handover Required message 203 to the source MME 22 to request the handover. This Handover Required message 203 includes an ID of the target GERAN (CS access network) to which the call is to be transferred and indicates to the MME 22 that this is a SRVCC handover operation only towards a CS domain. At step 204 the source MME 22 splits the voice bearer from the non-voice bearers. The source MME 22 initiates the PS-CS handover procedure for the voice bearer only by sending a SRVCC PS to CS Request message 205 to the MSC Server 23. This message 205 also includes information about the call, including the International Mobile Subscriber Identity (IMSI), the Correlation Mobile Subscriber Integrated Services Digital Network Number (C-MSISDN), the Session Transfer Number for SRVCC (STN-SR), and supported codecs.

Now the MSC Server 23 exchanges a query and response 205a with the IMS 26 (e.g. an ATCF or a Service Centralisation and Continuity AS - SCC AS in the IMS 26). Using the information received from the MME 22 (IMSI, C-MSISDN, STN-SR, supported codecs) the query 205a requests provision of information that includes an indication of (i.e. the identity of) any already seized MGW (i.e. an MGW that is currently active in relation to calls over the CS access). In general, unless it is the first time that a handover request is being handled by a particular ATCF, then the ATCF will have already seized an ATGW during the initial call setup when the call was established over the PS access, and so it will at least provide an indication of this in its response to the query . The query 205a may also request provision of information identifying the currently used codec, as well as other information that the MSC Server 23 may require relating to the session media, such as payload type number to be used in the Real-time Transport Protocol (RTP). The query 205a may be, for example, a SIP MESSAGE or SIP INFO. The IMS 26 (ATCF/SCC AS) handles this request with priority and responds as quickly as possible. The priority may be determined based on the content of the query or by an additional priority indicator in the query message 205a.

From the query response, the MSC server 23 is informed about any already seized MGW and at step 205b the MSC server 23 then uses this information to determine an appropriate MGW to select as the Mobile-Media Gateway (M-MGW) 27 for the transferred call on the CS access. This may be the (or one of the) MGW(s) identified in the query response. However, the MSC server 23 may also determine that it would be better to use a different MGW, for example to optimise the media routing. The MSC server 23 may also determine the codec that needs to be used for the CS access based on information provided in the query response, and may use any other information it has requested, such as the payload type numbers, to determine the resources to be allocated for the call over the CS access. The MSC server 23 uses this information in the subsequent procedure, as shown in signals 206 to 217, which essentially follow the standard procedure subject to the following additional indications.

The MSC Server 23 converts the PS to CS handover request 205 into a CS inter-MSC handover request by sending a Prepare Handover Request message 206 to the target MSC 24. At this point, at step 205c, the MSC Server 23 , based on its determination at step 205b of the appropriate MGW to use as the M-MGW either seizes a new MGW or an already-seized MGW that it was informed about in response to the query 205a. The Prepare Handover Request message 206 may also include an indication of the voice codec that was provided in the query response at 205a. The Target MSC 24 performs resource allocation with the Target BSS 25 by exchanging Handover Request/ Acknowledge messages 207. At this point, the Target BSS 25 is also informed of the codec to be used. Signals 208 and 209 follow the standard procedure in which the Target MSC 24 sends a Prepare Handover Response message 208 to the MSC Server 23, and in signal exchange 209 a circuit connection is established between the target MSC and the MGW associated with the MSC Server 23.

In signal 210 the MSC Server 23 initiates the transfer of the session by sending a SIP INVITE message towards the IMS 26 using, for a non-emergency session, the STN-SR, or for an emergency session the Emergency STN-SR (E-STN-SR). Provided that appropriate resources could be allocated in step 207, signal 210 includes, in the Session Description, information of the codec to be used, as obtained in step 205a, as well as other information relating to the session. This information is required for the session set-up procedure. In this case, the information is also required because, in the SDP where the codec is specified, other parameters from the MSC Server/MGW 23 are also required, such as the IP address and port to be used for the MSC Server/MGW 23. Thus, the Invite 210 with SDP (and codec) confirms to the IMS 26 that the transfer is taking place, and includes other information that the IMS 26 does not yet know about (such as IP address/ports).

The remaining signals follow the standard procedure, in which at step 211 the remote end is updated with the SDP of the CS access leg, and the downlink flow of the voice media is switched to the CS access leg. At step 212 the source IMS access leg is released. Signal 213 is a SRVCC PS to CS Response message sent from the MSC Server 23 to the Source MME 22. Signal 214 is a Handover Command message sent from the Source MME 22 to the Source E-UTRAN 21, which includes information about the voice media component only. Signal 215 is a Handover from E-UTRAN Command message sent from the Source E-UTRAN 21 to the UE 20. At step 216 the UE 20 tunes to the GERAN. At step 217, the handover is detected by the network entities and the procedure continues to its conclusion as defined in the standard.

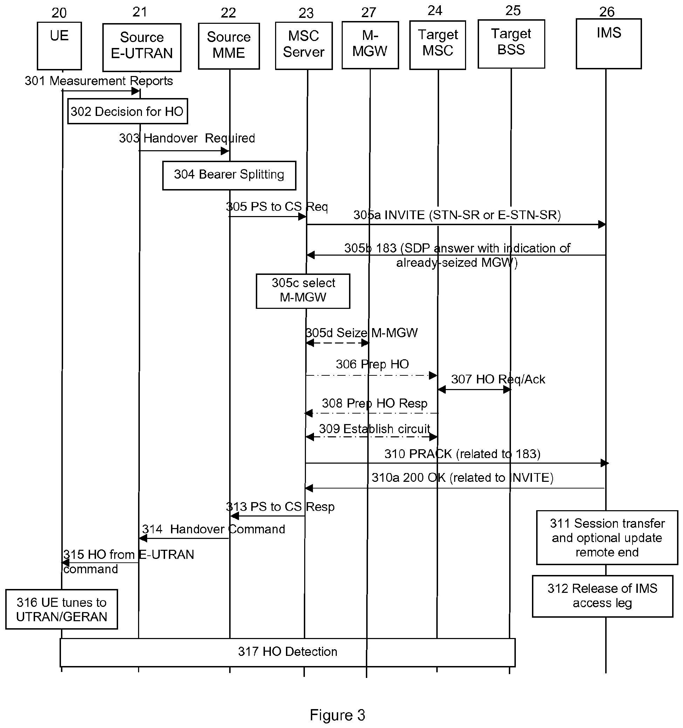

Referring to Figure 3, this illustrates the signalling involved in part of a SRVCC handover procedure for a second embodiment. The same network entities are involved as in the embodiment of Figure 2. In this embodiment, the indication of any already seized MGWs, optionally as well as codec information, is obtained by the MSC server 23 in response to an early initiation of the session transfer. For this to occur, the entity (ATCF or SCC-AS) in the IMS 26 needs to be configured to reply with a provisional response to the session initiation request (SIP INVITE).

Signals 301 to 305 follow the standard and are the same as described above for Figure 2. Now, in signal 305a, the MSC Server 23 starts the session transfer procedure by sending the INVITE (equivalent to signal 210 in the Figure 2 embodiment) using the information it received from the Source MME 22 (IMSI, C-MSISDN, STN-SR). Because at this stage the MSC server will not yet have selected a MGW as the M-MGW for the transferred call, the INVITE may be an empty Invite without any SDP information. The ATCF/SCC AS in the IMS 26 handles this request with priority and responds as quickly as possible with a provisional response (a SIP 183 message) 305b. As with the first embodiment described above, the priority may be determined based on the content of the query or by an additional priority indicator in the Invite message 305a. The 183 response 305b includes an indication (and identities) of one (or more) already seized MGWs.

The 183 response 305b may also include information about the codec and any other required information such as the payload types. The IMS 26 remote end selects the most suitable codec. The remote end is the next node that handles media related interactions, and may, for example, be the ATCF (controlling the ATGW) or an MGCF (controlling an IM MGW). If there are no media gateways on the media path, then the remote end can also be a terminal. If the codec already used in the (PS access) session exists for the CS access, this codec will be selected and used in the 183 response 305b. If the INIVITE 305a from the MSC did not include SDP information, the IMS 26 entity (ATCF/SCC AS) will include an SDP offer in the 183 message 305b with appropriate SDP for the currently ongoing session.

The MSC Server 23 waits for the 183 response 305b and then, at step 305c, decides whether to use the MGW that was indicated in the response (or one of the MGWs if more than one was indicated) as the M-MGW 27 it selects for the call over the CS access. At this point, at step 305d, the MSC Server 23 , based on its determination at step 305c of the appropriate MGW to use as the M-MGW 27, either seizes a new MGW or an already-seized MGW that it was informed about in response 305b. Note that if the 183 response is sent by the ATCF, then it is likely that the indicated MGW will be the ATGW already seized by the ATCF, and could also be functioning as a TrGW. However, the MSC Server 23 could select a different MGW instead, especially if the different MGW resulted in better optimisation of media routing. The MSC Server 23 may also determine the codec to be used in the CS access and the payload types used in RTP before proceeding with the handover request at signal 306.

Signals 306 to 309 are the same as signals 206 to 209 of the first embodiment. Thus, the Prepare Handover Request message 306 sent from the MSC server 23 to the target MSC 24 includes an indication of the selected M-MGW , and (optionally) the voice codec that was provided in the 183 response 305b. Also, when the Target MSC 24 performs resource allocation with the Target BSS 25 by exchanging Handover Request/ Acknowledge messages 307, the Target BSS 25 is informed of the M-MGW and codec to be used.

When the MSC server 23 is ready to have the session media transferred to the CS access, e.g. after signal 309, it sends the PRACK acknowledgement message 310 (related to the SIP 183 message 305b) to the IMS 26. This is done to confirm the selected M-MGW and codec and initiate the transfer of the media. If resources could not be granted in the RAN by previous steps (306-309), the MSC Server 23 sends a CANCEL message to abort the session transfer. Otherwise, the IMS 26 responds with a SIP 200 OK message 310a (related to the INVITE 305a) when the media has been transferred.

The remainder of the procedure steps/signals 311-317 follow the standard and are the same as steps/signals 211-217 described above for the first embodiment.

Note that the procedures described above refer principally to selecting the MGW for the transferred call, although details of how the procedure allows selection of an appropriate codec are also included. These are perceived as being the major advantages of the new procedures. However, it should be noted that the SDP in the SIP messages (such as INVITE) used in the call set-up and handover procedures can include a large number of parameters. There will often be other media related information that is required or is advantageous to include.

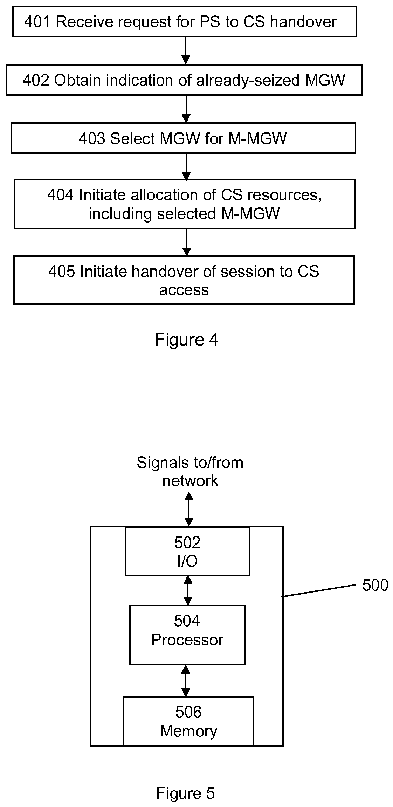

Figure 4 is a flow diagram illustrating the principal method steps involved. At step 401 a request is received for a SRVCC, PS to CS handover of a call. At step 402, an indication of an already-seized MGW is obtained from the IMS. As described above other media parameters may also be obtained at this step. At step 403 the MGW to be used as the M-MGW for the call is selected. The selection is made based on the obtained indication of the already-seized MGW (although a different MGW may eventually be selected, if other reasons dictate). At step 404, the procedure for allocating resources for the CS access is initiated, and this includes the selected M-MGW. Finally, at step 404, transfer of the session to the CS access, is initiated.

Figure 5 is a schematic block diagram illustrating the principal functional entities of a MSC server 500 configured to implement the new procedures described above. The MSC server 500 includes an input/output 502 for sending and receiving messages to/from other network entities. A memory 506 stores data and programming instructions. A processor 504 implements the programming instructions such that when a request for a SRVCC handover of a session, established over a PS access via an IMS network, is received, the MSC server 500 obtains from the IMS network an indication of an already-seized MGW that has been established for use in one or more other sessions over the CS access. The MSC server 500 is programmed to select a MGW as a M-MGW for the session based on the obtained indication, and to initiate the allocation of resources for the session in the CS access network by specifying the MGW to be used as the M-MGW. The MSC server 500 also initiates transfer of the session to the CS access.

From the above it will be apparent that the following new procedures have been introduced: a new procedure to communicate with the IMS (ATCF/SCC AS) prior to resource establishment in the CS access network; and an active decision to select the MGW to use as the M-MGW. Advantageously, this can be the same MGW (ATGW, TrGW) as being used by the ATCF.

It is an advantage that, when the session transfer takes place, only one physical MGW needs to be used, resulting in a reduction in signalling and processing requirements. Also, the same mechanisms can be employed for obtaining information about the codec being used (and additional media parameters such as payload type) between the accesses, allowing selection of a common codec for both CS and PS accesses. This allows use of the best possible codec, and ensures that the transferred session can proceed without the need for transcoding.

## Claims

1. A method of performing a session transfer with Single Radio Voice Call Continuity, SRVCC, from a Packet Switched, PS, access to a Circuit Switched, CS, access of a telecommunications session that has been established over the PS access via an IP Multimedia Subsystem, IMS, network, the method, effected by a MSC Server (23), comprising:
receiving (305, 401) a request for the transfer of the session to the CS access;
obtaining (305a, 305b, 402) from the IMS network an indication of one or more already seized media gateways, MGWs, selecting (305c, 403) either a new MGW or one of the one or more already-seized MGWs as a Mobile-Media Gateway, M-MGW, for the session based on the obtained indication;
initiating (306, 307, 404) allocation of resources for the session in the CS access network, including specifying the MGW to be used as the Mobile-Media Gateway, M-MGW; and
initiating (309, 405) transfer of the session to the CS access.

2. The method of claim 1, wherein obtaining the indication of the already-seized MGW comprises sending a query to the IMS requesting provision of information that includes the already-seized MGW indication.

3. The method of claim 2, wherein the IMS responds to the query by providing the requested already-seized MGW indication and wherein the IMS prioritises the response to ensure it is provided as quickly as possible.

4. The method of claim 3 wherein the query includes a priority indicator to trigger prioritisation of the response by the IMS.

5. The method of any of claims 1 to 3 wherein obtaining the MGW indication comprises initiating the session transfer using a Session Initiation Protocol, SIP, signal sent to the IMS and receiving a provisional response from the IMS comprising a Session Description with the already-seized MGW indication.

6. The method of any preceding claim, wherein the already-seized MGW indication is obtained from an Access Transfer Control Function, ATCF, a Service Centralization and Continuity, SCC, Application Server, AS, or an Emergency Access Transfer Function, EATF.

7. The method of any preceding claim, wherein the already seized MGW is an Access Transfer Gateway, ATGW, and/or a Transition Gateway, TrGW.

8. The method of any preceding claim, wherein obtaining the already-seized MGW indication from the IMS also comprises obtaining an indication of a currently used voice codec in the session and, optionally, information relating to the media currently being used.

9. The method of claim 8, wherein the information relating to the media currently being used comprises any of: bandwidth parameters, codec mode set of operation, payload type and payload type numbers.

10. A Mobile Switching Centre, MSC, server (500) of a telecommunications network comprising:
an input/output (502) for sending and receiving messages to/from other network entities;
a memory (506) storing data and programming instructions; and
a processor (504) implementing the programming instructions to action a Single Radio Voice Call Continuity, SRVCC request for transfer of a session established over a Packet Switched, PS, access via an IP Multimedia Subsystem, IMS, network to a Circuit Switched, CS, access; to obtain from the IMS network an indication of one or more already seized media gateways, MGWs; to select either a new MGW or one of the one or more already-seized MGWs as a Mobile-Media Gateway, M-MGW, for the session based on the obtained indication; to initiate allocation of resources for the session in the CS access network, including specifying the MGW to be used as the M-MGW; and to initiate transfer of the session to the CS access.

11. A computer program product, which causes, when run on the computer of the MSC server, the computer to send to the IP Multimedia Subsystem, IMS, network a request for transfer of a session established over a Packet Switched, PS, access to a Circuit Switched, CS, access with Single Radio Voice Call Continuity, SRVCC; to obtain from the IMS network an indication of an already-seized media gateway, MGW; to select a MGW as a Mobile-Media Gateway, M-MGW, for the session based on the obtained indication; to initiate allocation of resources for the session in the CS access network, including specifying the MGW to be used as the M-MGW; and to initiate transfer of the session to the CS access.

## Patentansprüche

1. Verfahren zum Durchführen einer Session-Übertragung mit Einzelfunk-Sprachanrufkontinuität, SRVCC, von einem paketvermittelten, PS, Zugang zu einem leitungsvermittelten, CS, Zugang einer Telekommunikations-Session, die über den PS-Zugang mittels eines IP-Multimedien-Subsystems, IMS, Netzwerk eingerichtet wurde, das Verfahren, bewirkt von einem MSC-Server (23), umfassend:
Empfangen (305, 401) einer Anfrage zur Übertragung der Session an den CS-Zugang;
Erhalten (305a, 305b, 402) von dem IMS-Netzwerk einer Angabe von einem oder mehreren schon erfassten Medien-Gateways, MGWs,
Auswählen (305c, 403) entweder eines neuen MGWs oder einen des einen oder mehreren schon erfassten MGWs als einen Mobil-Medien-Gateway, M-MGW für die Session basierend auf der erhaltenen Angabe;
Einleiten (306, 307, 404) der Zuordnung von Ressourcen für die Session in dem CS-Zugangsnetzwerk, beinhaltend des Festlegens des MGWs, das als der Mobil-Medien-Gateway, M-MGW benutzt werden soll; und
Einleiten (309, 405) der Übertragung der Session an den CS-Zugang.

2. Verfahren nach Anspruch 1, wobei das Erhalten der Angabe des schon erfassten MGWs umfasst, eine Anfrage an das IMS zu senden, um Bereitstellung von Informationen anzufordern, die die schon erfasste MGW-Angabe beinhaltet.

3. Verfahren nach Anspruch 2, wobei das IMS auf die Anfrage durch Bereitstellen den angeforderten schon erfassten MGW-Angabe antwortet und wobei das IMS die Antwort priorisiert, um sicherzustellen, das es so schnell wie möglich bereitgestellt wird.

4. Verfahren nach Anspruch 3, wobei die Anfrage einen Prioritätsanzeiger beinhaltet, um die Priorisierung der Antwort von dem IMS auszulösen.

5. Verfahren nach einem der Ansprüche 1 bis 3, wobei das Erhalten der MGW-Angabe umfasst, die Session-Übertragung mittels eines Session-Einleitungs-Protokolls, SIP einzuleiten, das an das IMS gesendete Signal und eine vorläufige Antwort von dem IMS zu empfangen, die eine Session-Beschreibung mit der schon erfassten MGW-Angabe umfasst.

6. Verfahren nach einem vorstehenden Anspruch, wobei die schon erfasste MGW-Angabe von einer Zugangs-Übertragungs-Kontroll-Funktion, ATCF, einer Service-Zentralisierung und Kontinuität, SCC, einem Anwendungsserver, AS, oder einer Notzugangs-Übertragungs-Funktion, EATF erhalten wird.

7. Verfahren nach einem vorstehenden Anspruch, wobei der schon erfasste MGW ein Zugangs-Übertragungs-Gateway, ATGW, und/oder ein Übergangs-Gateway, TrGW ist.

8. Verfahren nach einem vorstehenden Anspruch, wobei das Erhalten der schon erfassten MGW-Angabe von dem IMS auch umfasst, eine Angabe eines aktuell benutzten Sprach-Codecs in der Session zu benutzen, und wahlweise, Informationen, die sich auf die aktuell benutzten Medien beziehen.

9. Verfahren nach Anspruch 8, wobei die Informationen, die sich auf die aktuell benutzten Medien beziehen, eines von: Bandbreitenparameter, Codec-Modus-Betriebssatz, Payload-Typ und Payload-Typ-Nummern umfassen.

10. Mobiles Schaltzentrum, MSC, Server (500) eines Telekommunikationsnetzwerkes umfassend:
einen Eingang/Ausgang (502) zum Senden und Empfangen von Nachrichten zu/von anderen Netzwerkeinheiten;
einen Speicher (506), der Daten und Programmierungsanleitungen speichert; und
einen Prozessor (504), der die Programmierungsanleitungen ausführt, um eine Einzelfunk-Sprachanrufkontinuität, SRVCC, Anfrage, zur Übertragung einer Session, die über einen paketvermittelten, PS, mittels eines IP-Multimedien-Subsystems, IMS, Netzwerk Zugang zu einem leitungsvermittelten, CS, Zugang festgelegt ist; um von dem IMS-Netzwerk eine Angabe von einem oder mehreren schon erfassten Medien-Gateways, MGWs, zu erhalten;
um entweder einen neuen MGW, oder einen des einen oder mehreren schon erfassten MGWs als Mobil-Medien-Gateway, M-MGW für die Session basierend auf der erhaltenen Angabe auszuwählen; um Zuordnung von Ressourcen für die Session in dem CS-Zugangsnetzwerk einzuleiten, beinhaltend des Festlegens des MGWs, der als M-MGW benutzt werden soll; und die Übertragung der Session auf den CS-Zugang einzuleiten.

11. Computerprogrammprodukt, das verursacht, wenn es auf dem Computer des MSC-Servers betrieben wird, dass der Computer dem IP-Multimedien-Subsystem, IMS, Netzwerk eine Anfrage zur Übertragung einer Session sendet, die über einen paketvermittelten, PS, Zugang zu einem leitungsvermittelten, CS, Zugang mit Einzelfunk-Sprachanrufkontinuität, SRVCC eingerichtet ist; um von dem IMS-Netzwerk eine Angabe von einem schon erfassten Medien-Gateway, MGW zu erhalten; um einen MGW als einen Mobil-Medien-Gateway, M-MGW für die Session basierend auf der erhaltenen Angabe auszuwählen; um Zuordnung von Ressourcen für die Session in dem CS-Zugangsnetzwerk, beinhaltend des Festlegens des MGWs, das als der Mobil-Medien-Gateway, M-MGW benutzt werden soll einzuleiten; und um Übertragung der Session an den CS-Zugang einzuleiten.

## Revendications

1. Procédé consistant à effectuer un transfert de session avec Continuité d'Appel Vocal Radio Unique, SRVCC, depuis un accès à Commutation de Paquets, PS, à destination d'un accès à Commutation de Circuits, CS, d'une session de télécommunications qui a été établie sur l'accès PS via un réseau de Sous-système Multimédia sur IP, IMS, le procédé, effectué par un Serveur MSC (23), comprenant :
la réception (305, 401) d'une demande de transfert de la session vers l'accès CS ;
l'obtention (305a, 305b, 402) en provenance du réseau IMS d'une indication d'une ou plusieurs passerelles média déjà exploitées, MGW,
la sélection (305c, 403) soit d'une nouvelle MGW soit d'une de la ou des plusieurs MGW déjà exploitées comme une Passerelle Média-Mobile, M-MGW, pour la session sur la base de l'indication obtenue ;
l'amorçage (306, 307, 404) d'attribution de ressources pour la session dans le réseau d'accès CS, incluant la spécification de la MGW à utiliser en tant que Passerelle Média-Mobile, M-MGW ; et
l'amorçage (309, 405) d'un transfert de la session à l'accès CS.

2. Procédé selon la revendication 1, dans lequel l'obtention de l'indication de la MGW déjà exploitée comprend l'envoi d'une question à l'IMS demandant la présence d'informations qui incluent l'indication de la MGW déjà exploitée.

3. Procédé selon la revendication 2, dans lequel l'IMS répond à la question en fournissant l'indication demandée de MGW déjà exploitée et dans lequel l'IMS donne la priorité à la réponse pour assurer qu'elle est fournie aussi rapidement que possible.

4. Procédé selon la revendication 3, dans lequel la question inclut un indicateur de priorité pour déclencher la priorisation de la réponse par l'IMS.

5. Procédé selon l'une quelconque des revendications précédentes 1 à 3, dans lequel l'obtention de l'indication de MGW comprend l'amorçage du transfert de session en utilisant un signal de Protocole d'Amorçage de session, SIP, envoyé à l'IMS et la réception d'une réponse provisoire provenant de l'IMS comprenant une Description de Session avec l'indication de MGW déjà exploitée.

6. Procédé selon l'une quelconque des revendications précédentes, dans lequel l'indication de MGW déjà exploitée est obtenue à partir d'une Fonction de Commande de Transfert d'Accès, ATCF, d'une Continuité et Centralisation de Service, SCC, d'un Serveur d'Applications, AS, ou d'une Fonction de Transfert d'Accès d'Urgence, EATF.

7. Procédé selon l'une quelconque des revendications précédentes, dans lequel la MGW déjà exploitée est une Passerelle de Transfert d'Accès, ATGW, et/ou une Passerelle de Transition, TrGW.

8. Procédé selon l'une quelconque des revendications précédentes, dans lequel l'obtention de l'indication de MGW déjà exploitée provenant de l'IMS comprend également l'obtention d'une indication d'un codec vocal actuellement utilisé dans la session et, de manière facultative, d'informations se rapportant aux médias actuellement utilisés.

9. Procédé selon la revendication 8, dans lequel les informations se rapportant aux médias actuellement utilisés comprennent n'importe lequel de : paramètres de bande passante, jeu de fonctionnement de mode codec, type de charge utile et nombres de types de charge utile.

10. Serveur (500) de Centre de Commutation du Service Mobile, MSC, d'un réseau de télécommunications comprenant :
une entrée / sortie (502) pour envoyer et recevoir des messages vers / en provenance d'autres entités de réseau ;
une mémoire (506) stockant des données et instructions de programmation ; et
un processeur (504) mettant en oeuvre les instructions de programmation pour actionner une demande de transfert avec Continuité d'Appel Vocal Radio Unique, SRVCC, d'une session établie sur un accès à Commutation de Paquets, PS, via un réseau de Sous-système Multimédia sur IP, IMS, vers un accès à Commutation de Circuits, CS ; pour obtenir à partir du réseau IMS une indication d'une ou plusieurs passerelles média déjà exploitées, MGW ; pour sélectionner soit une nouvelle MGW ou l'une de la ou des plusieurs MGW déjà exploitées en tant que Passerelle Média-Mobile, M-MGW, pour la session sur la base de l'indication obtenue; pour amorcer l'attribution de ressources pour la session dans le réseau d'accès CS, incluant la spécification de la MGW à utiliser en tant que M-MGW ; et pour amorcer le transfert de la session à l'accès CS.

11. Produit formant programme informatique, qui amène, lorsqu'il est exécuté sur l'ordinateur du serveur MSC, l'ordinateur à envoyer au réseau de Sous-système Multimédia sur IP, IMS, une demande de transfert d'une session établie sur un accès à Commutation de Paquets, PS, vers un accès à Commutation de Circuits, CS, avec Continuité d'Appel Vocal Radio Unique, SRVCC ; pour obtenir en provenance du réseau IMS une indication d'une passerelle média déjà exploitée, MGW ; pour sélectionner une MGW en tant que Passerelle Média-Mobile, M-MGW, pour la session sur la base de l'indication obtenue; pour amorcer l'attribution de ressources pour la session dans le réseau d'accès CS, incluant la spécification de la MGW à utiliser en tant que M-MGW ; et pour amorcer le transfert de la session vers l'accès CS.
